# EUROPÄISCHE PATENTANMELDUNG

(11) **EP 2 807 919 A2**
(43) Veröffentlichungstag der Anmeldung: **03.12.2014**
(21) Anmeldenummer: 14164064.9
(22) Anmeldetag: 09.04.2014
(51) Int. Cl.: A01K 5/01

(54) **Aufnahmetopf für die Aufnahme und Darbietung von Futter- oder Ergänzungsfuttermitteln**

(30) Priorität: 28.05.2013 DE 202013102313 U
(71) Anmelder: Crystalyx Products GmbH, 48155 Münster (DE)
(72) Erfinder: Rösmann, Peter, Dr., 48155 Münster (DE)
(74) Vertreter: Raffay & Fleck

(57) **Zusammenfassung**

Offenbart wird ein zu einer Oberseite hin mit einer Zugangsöffnung offener Aufnahmetopf für die Aufnahme und Darbietung von Futter- oder Ergänzungsfuttermitteln für Nutztiere, insbesondere für Schweine in der Stallhaltung, mit einem Bodenblech (2) sowie vier Seitenblechen (3, 4), die untereinander jeweils mit einem benachbarten Seitenblech (4, 3) und mit dem Bodenblech (2) verbunden sind, wobei jedes Seitenblech (3, 4) gegenüber einer zu dem Bodenblech (2) senkrecht verlaufenden Ebene mit einer die Zugangsöffnung begrenzenden Oberkante (9) in Richtung eines jeweils gegenüberliegenden Seitenblechs (3, 4) geneigt verläuft, wobei in Bereichen, in denen benachbarte Bleche (Seitenbleche und/oder Bodenblech) (2, 3, 4) aneinander angrenzen, Durchtrittsöffnungen (6, 8) vorgesehen sind.

Mit einem solchen Aufnahmetopf wird eine Möglichkeit gegeben, Nutztieren, insbesondere Schweinen, dabei insbesondere solchen, die in Stallhaltung gehalten werden, Futtermittel bzw. Ergänzungsfuttermittel in einer Weise darbieten zu können, die den natürlichen Wühl-, Spiel- bzw. Erkundungstrieb der Tiere anregt und bedient. Diese Art der Beschäftigung hilft insbesondere, ansonsten aufgrund einer Unterbeschäftigung der Tiere und dem in der Haltung auftretenden sozialem Druck auftretende Auseinandersetzungen zwischen den Tieren, wie etwa Beißereien oder gar Kannibalismus, zu vermeiden.

## Beschreibung

Die vorliegende Erfindung betrifft einen zu einer Oberseite hin mit einer Zugangsöffnung offenen Aufnahmetopf für die Aufnahme und Darbietung von Futter-oder Ergänzungsfuttermitteln für Nutztiere, insbesondere für Schweine in der Stallhaltung.

In der modernen Nutztierhaltung sind aus wirtschaftlichen Gründen regelmäßig Tierbestände mit hohen Besatzdichten anzutreffen. Die zulässigen Besatzdichten sind in der Tierschutz-Nutztierhaltungsverordnung festgelegt. Aber auch diese Besatzdichten liegen insbesondere regelmäßig höher als die arttypischen Besiedelungsdichten der Nutztiere bzw. ihrer natürlichen Verwandten. Dies gilt prinzipiell für nahezu alle in der Landwirtschaft gehaltenen Nutztiere, wie z.B. Geflügel, etwa Hühner, Rinder und Schweine. Bei den so gehaltenen Nutztieren können in reizarmer Umgebung die hohen Besatzdichten zu sozialen Stresssituationen führen, in denen sie sich selbst oder anderen Tieren der Gruppe Schaden zuführen, indem sie beispielsweise in derselben Haltung gehaltene Artgenossen attackieren oder dgl. Um entsprechendes zu verhindern und dabei auch dem Tierschutz gerecht zu werden, werden in der modernen Nutztierhaltung entsprechende Maßnahmen ergriffen, um entsprechende Stresssituationen zu vermeiden und die gehaltenen Tiere ihren natürlichen Instinkten entsprechend zu beschäftigen. Insbesondere Schweine, die häufig ausschließlich in Zucht-, Aufzucht- oder Mastställen gehalten werden, sind Tiere mit einem hohen natürlichen Bewegungsdrang und ausgeprägter Neugier bzw. einem ausgeprägten "Spieltrieb". Dabei entspricht es dem natürlichen Verhalten, dass Schweine zur Nahrungssuche den Boden durchwühlen nach Fressbarem, in der Natur z.B. Wurzelknollen, Insektenlarven, Mäusen und dgl. Werden in der Stallhaltung Schweine nun bloß über eine Darbietung von Futter in einem Trog versorgt und wird ihnen keine weitere Ausgleichsmöglichkeit zur Beschäftigung geboten, so können die Schweine ihrem im Instinkt angelegten Such- und Wühltrieb nicht nachkommen. Fehlt es auch ansonsten an Beschäftigungsmöglichkeiten in der Stallbucht, entlädt sich die "Unterbeschäftigung" der Schweine häufig in sozialem Druck, es kommt zu Beißereien und bisweilen Kannibalismus.

Für die Schweinehaltung schreibt entsprechend die Tierschutz-Nutztierhaltungsverordnung vor, dass in der Schweinehaltung ein Schwein jederzeit Zugang zu veränderbarem Beschäftigungsmaterial haben muss. Bekannte Maßnahmen, die in der Stallhaltung umgesetzt werden, sind Spielketten, Pendelbalken, Hebebalken, Scheuer-Spiel-Balken, Spieleautomaten, Wühlerdetröge, in denen Futtermittel vermengt mit Erde oder Torf dargeboten werden, Wühltürme, und dgl.

Ein weiterer wesentlicher Bestandteil der Tier-, insbesondere Schweinehaltung, ist die Darreichung von Mineralstoffen, insbesondere Salzlecksteinen oder Salzleckpasten. Diese haben einen günstigen Einfluss auf das Erkundungsverhalten der Tiere und leisten einen Beitrag zur Versorgung der Tiere mit Nähr- und Wirkstoffen.

Bisher wurden entsprechende Mineralsalze und Gesteinsmehle entweder der üblichen Futtergabe beigemengt oder Mineralsalze in Form von chemisch gehärteten Salzlecksteinen im Bereich der Stallbuchtengitter aufgehängt. Diese Art der Präsentation spricht jedoch den natürlich Spiel- bzw. Erkundungstrieb der Schweine nicht oder nur sehr ungenügend an. Der arttypische Wühltrieb der Schweine bleibt hierbei unberücksichtigt.

Hier soll mit der Erfindung Abhilfe geschaffen werden, indem eine Möglichkeit gegeben wird, mit der Futtermittel bzw. Ergänzungsfuttermittel den Nutztieren, insbesondere Schweinen, dabei insbesondere solchen, die in Stallhaltung gehalten werden, in einer Weise dargeboten werden können, die den natürlichen Wühl-, Spiel- bzw. Erkundungstrieb der Tiere anregt und bedient.

Zur Lösung dieser Aufgabe wird ein zu einer Oberseite hin mit einer Zugangsöffnung offener Aufnahmetopf für die Aufnahme und Darbietung von Futter- oder Ergänzungsfuttermitteln für Nutztiere, insbesondere für Schweine in der Stallhaltung, vorgeschlagen, der ein Bodenblech sowie vier untereinander und mit dem Bodenblech verbundene Seitenbleche aufweist, wobei jedes Seitenblech gegenüber einer zu dem Bodenblech senkrecht verlaufenden Ebene mit einer die Zugangsöffnung begrenzenden Oberkante in Richtung eines jeweils gegenüberliegenden Seitenbleches geneigt verläuft und wobei in Bereichen, in denen benachbarte Bleche (Seitenbleche und/oder Bodenbleche) einander angrenzen, Durchtrittsöffnungen vorgesehen sind.

Der erfindungsgemäße Aufnahmetopf zeichnet sich in den genannten Merkmalen durch solche Eigenschaften aus, die - insbesondere in der Schweinehaltung - dem natürlichen Wühl-, Spiel- und Erkundungstrieb dieser Tiere entgegenkommen und diesen fördern bzw. erfüllen. Durch die Zugangsöffnung kann das Tier, insbesondere ein Schwein, mit seiner Schnauze bzw. seinem Rüssel in das Innere des Aufnahmetopfes hineingelangen und dort vorhandenes Futtermittel bzw. Ergänzungsfuttermittel suchen, danach "wühlen". Wenn das Futtermittel oder Ergänzungsfuttermittel, wie dies im Rahmen der erfindungsgemäßen Nutzung des Aufnahmetopfes vorgesehen ist, direkt und unmittelbar in dem Aufnahmetopf eingebracht ist, kann das Tier, insbesondere ein Schwein, die sich aufgrund der pyramidenähnlich aufeinander zulaufenden Seitenbleche ergebenden "beschatteten" Bereiche nur mit Wühl- und Suchbewegungen erreichen. Darüber hinaus wird bei einem solchen Vorgehen Futtermittel bzw. Ergänzungsfuttermittel, insbesondere wenn dieses pastöser Natur ist, durch die Durchtrittsöffnungen hindurch gedrückt und dort austreten. Durch ein Wühlen im Inneren des Aufnahmetopfes bewirkt ein diesen nutzendes Tier, insbesondere ein Schwein, somit, dass Futtermittel bzw. Ergänzungsfuttermittel auch durch diese Durchtrittsöffnungen hindurch nach außen tritt, im Anschluss von außen her erreichbar ist. Auch dieser Vorgang regt den Wühl- bzw. Spieltrieb an bzw. dient dessen Befriedigung, so dass der erfindungsgemäße Aufnahmetopf einer Beschäftigung des Nutztieres, insbesondere des Schweines, dient und insoweit nicht bloß die Funktion eines Darbietungsbehälters für Futtermittel oder Ergänzungsfuttermittel erfüllt, sondern darüber hinaus auch noch eine gesteigerte Beschäftigungsfunktion ausübt.

Der Aufnahmetopf eignet sich, wie bereits ausgeführt, insbesondere gut für die Aufnahme eines pastös gebildeten Futter- oder Ergänzungsfuttermittels, wobei es sich hierbei insbesondere auch um eine mineralhaltiges, pastöses Ergänzungsfuttermittel, z.B. ein solches auf Melassebasis, handeln kann. Dabei wird das insbesondere pastöse Futtermittel bzw. Ergänzungsfuttermittel, z.B. ein mineralhaltiges Ergänzungsfuttermittel auf Melassebasis, ohne eigene Umverpackungseinheit direkt in den erfindungsgemäßen Aufnahmetopf eingefüllt und den Nutztieren so präsentiert.

Um zu verhindern, dass sich ein den erfindungsgemäßen Aufnahmetopf nutzendes Nutztier an den Oberkanten der Seitenbleche etwa verletzt, kann entlang dieser Oberkanten in einer vorteilhaften Weiterbildung ein umlaufender Kantenschutz gebildet sein. Dieser Kantenschutz kann beispielsweise die Form einer Rundwulst aufweisen.

Da insbesondere Schweine, aber auch andere größere Nutztiere, bei Wühl- und Fressbewegungen große Kräfte aufbringen und den erfindungsgemäßen Aufnahmetopf, der typischerweise am Stallboden anzuordnen ist, vor sich her und durch ihre Stallbucht bewegen würden, wird dieser Aufnahmetopf mit Vorteil an dem Stallboden zu befestigen sein. Dafür können beispielsweise, wie in einer vorteilhaften Ausgestaltung der Erfindung vorgesehen, in dem Bodenblech Befestigungsöffnungen zum Durchführen von Befestigungsmitteln vorgesehen sein. Derartige Befestigungsmittel können z.B. herkömmliche Spaltenanker sein zur Verankerung des Aufnahmetopfes in einem üblichen und bekannten Spaltenboden einer Stallbucht. Die Befestigungsöffnungen können insbesondere und wie gemäß einer vorteilhaften Weiterbildung der Erfindung vorgesehen, in Bereichen des Bodenbleches liegen, die von einer senkrechten Projektion eines Seitenbleches auf das Bodenblech beschattet sind. Dort sind dann entsprechende durch die Befestigungsöffnungen geführte Befestigungsmittel mit ihren innerhalb des Aufnahmetopfes liegenden Enden so versteckt und in einem Bereich anzubringen, der für das den Aufnahmetopf nutzende Tier unzugänglich ist, während eines Wühl- bzw. Fressvorganges nicht erreicht werden kann. Dies schaltet letztlich die Verletzungsgefahr aus, die ansonsten von derartigen Befestigungsmitteln ausgehen könnte. Die Befestigungsöffnungen können gemäß einer vorteilhaften Weiterbildung der Erfindung Langlöcher sein, die parallel zu einer angrenzenden Kantenlinie des Bodenbleches verlaufen.

Die Durchtrittsöffnungen, die erfindungsgemäß in Bereichen, in denen benachbarte Bleche aneinander grenzen, vorgesehen sind, müssen nicht zwangsläufig an allen dieser Stoßkanten vorhanden sein. Mit Vorteil können in den Bereichen, in denen das Bodenblech mit den angrenzenden Seitenbereichen zusammenstößt, mehrere von festen Materialverbindungsstegen unterbrochene Durchtrittsöffnungen angeordnet sein. Dies kann z.B. im Übergang zu nur einem Seitenblech, im Übergang zu zwei oder drei Seitenblechen oder aber im Übergang zu allen vier Seitenblechen der Fall sein. Derartige im Bereich des Überganges zwischen Bodenblech und Seitenblech angeordnete Durchtrittsöffnungen haben den Vorteil, dass wiederum bodennah entsprechendes Futtermittel oder Ergänzungsfuttermittel aus dem Aufnahmetopf quillt, so dass das Nutztier, insbesondere Schwein, wiederum in einen verwinkelten Bereich, in dem die Bodenebene übergeht in den schräg aufwärts verlaufenden Bereich des jeweiligen Seitenbleches, nach austretendem Futtermittel oder Ergänzungsfuttermittel suchen kann und dabei wiederum eine Such- bzw. Wühlbewegung durchführen muss und darüber den Erkundungstrieb ausüben kann.

Insbesondere zur Vereinfachung der Fertigung können in den Bereichen, in denen das Bodenblech mit den angrenzenden Seitenblechen zusammenstößt, angeordneten Durchtrittsöffnungen sowohl in den Bereich des jeweiligen Seitenbleches als auch in den Bereich des Bodenbleches hineinragen.

Neben entsprechenden Durchtrittsöffnungen im Übergangsbereich zwischen den Seitenblechen und dem Bodenblech können alternativ oder ergänzend auch in Bereichen, in denen zwei benachbarte Seitenbleche aneinander stoßen, Durchtrittsöffnungen vorgesehen sein, die insbesondere von einem dem Bodenblech nächstgelegenen Abschnitt ausgehend sich keilförmig nach oben zur Zugangsöffnung hin verjüngen. Solche in diesem Bereich angeordnete Durchtrittsöffnungen sorgen für einen Austritt von Futtermittel bzw. Ergänzungsfuttermittel in den Kantenbereichen, einem Bereich, der für das Nutztier, insbesondere Schwein, nur durch entsprechende nagende bzw. abknabbernde Kieferbewegungen erreichbar ist, was wiederum einer Ausreizung des Erkundungs- bzw. Spieltriebes und damit der Beschäftigung des Nutztieres dient.

Eine einfache Fertigung des erfindungsgemäßen Aufnahmetopfes kann erfolgen, wenn das Bodenblech und die Seitenbleche aus einem einstückigen Zuschnitt durch Umfalzen der Seitenbleche und Verbinden derselben an den Stoßlinien gebildet sind.

Besonders robust, gegenüber im Stallbereich auftretenden Einflüssen durch insbesondere Wasser, aber auch Urin, resistent und einfach zu reinigen ist der Aufnahmetopf dann, wenn, wie dies gemäß einer vorteilhaften Weiterbildung der Erfindung vorgesehen sein kann, das Bodenblech und die Seitenbleche aus Metall, insbesondere aus Edelstahl gebildet sind.

Als besonders zu bevorzugende Form hat sich ein Aufnahmetopf mit einem rechteckigen Bodenblech erwiesen, welches in den Maßen insbesondere eine Länge von 260 mm bis 340 mm, bevorzugt eine Länge von 280 mm bis 320 mm, besonders bevorzugt eine Länge von 300 mm, und eine Breite von 160 mm bis 240 mm, insbesondere von 180 mm bis 220 mm, besonders bevorzugt von 200 mm aufweisen kann. Ein entsprechendes Grundmaß des Bodenbleches ist dabei insbesondere für die Verwendung in der Schweinehaltung angepasst.

Die Höhe des Aufnahmetopfes, wie sie von dem Bodenblech ausgehend in lotrechter Richtung bis zu der Oberkante eines Seitenbleches gemessen ist, kann dabei bevorzugt im Bereich von 100 mm bis 150 mm, insbesondere von 120 mm bis 130 mm liegen.

Weitere Vorteile und Merkmale des erfindungsgemäßen Aufnahmetopfes ergeben sich aus der nachfolgenden Beschreibung eines Ausführungsbeispiels anhand der beigefügten Figuren. Dabei zeigen:
- Fig. 1: einen Blechzuschnitt mit Stanzungen und Falzlinien, aus dem ein erfindungsgemäßer Aufnahmetopf gebildet wird; und
- Fig. 2: in einer perspektivischen Darstellung einen erfindungsgemäßen Aufnahmetopf, gebildet aus einem Blechzuschnitt gemäß Fig. 1.

In den Figuren ist schematisch ein Ausführungsbeispiel für einen erfindungsgemäßen Aufnahmetopf für die Aufnahme und Darbietung von Futter- oder Ergänzungsfuttermitteln für Nutztiere, insbesondere für Schweine in der Stallhaltung, dargestellt. Dabei sind die Figuren als bloße Schemazeichnungen zu verstehen und keinesfalls maßstabsgerecht.

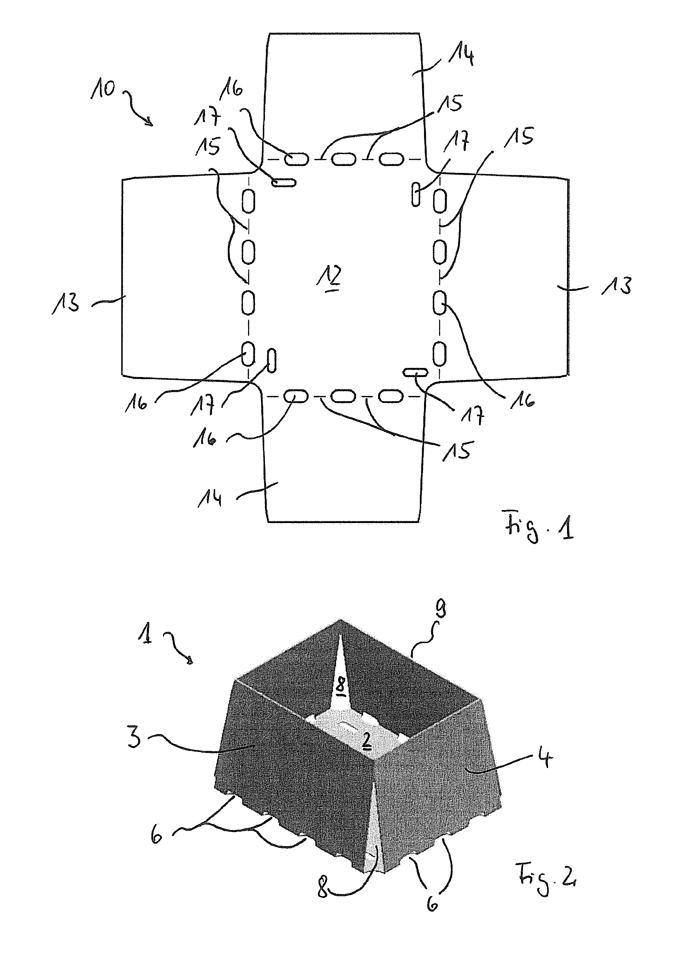

In Fig. 1 ist zunächst ein im Wesentlichen kreuzförmiger Blechzuschnitt 10 dargestellt, aus dem ein erfindungsgemäßer Aufnahmetopf gebildet werden kann. Der Blechzuschnitt 10 besteht aus einem Edelstahlblech, welches in diesem Ausführungsbeispiel eine Blechstärke von 1 bis 5 mm, insbesondere 2 mm, aufweist. An einem im Wesentlichen rechteckig gebildeten mittleren Abschnitt 12 schließen sich an den längeren Kanten des mittleren Abschnittes 12 zwei in der Fig. 1 rechts und links dargestellte Seitenabschnitt 13 sowie zwei weitere, in Fig. 1 oben und unten dargestellte, sich an die kürzeren Kanten des mittleren Abschnittes 12 anschließende Seitenabschnitte 14 an. Im Übergangsbereich zwischen dem mittleren Abschnitt 12 und den Seitenabschnitten 13 bzw. 14 sind, jeweils in Richtung einer Falzlinie 15 längserstreckte Langlöcher 16 gebildet. Weitere Langlöcher 17 sind im mittleren Abschnitt 12 nahe den Falzlinien 15 gebildet und durchbrechen diesen mittleren Abschnitt. Diese Langlöcher 17 sind mit ihrer Längserstreckung parallel zu der jeweils benachbarten Falzlinie 15 und damit zu der jeweiligen Kante des mittleren Abschnittes 12 orientiert.

Durch Umbiegen der Seitenabschnitte 13, 14 in der Fig. 1 aus der Zeichenebene heraus nach oben, und anschließendes Verbinden, hier Verschweißen, der aneinander anstoßenden Seitenkanten der Seitenabschnitte 13, 14 wird dann ein Aufnahmetopf 1, wie er in Fig. 2 dargestellt ist, erhalten. Dabei wird der mittlere Abschnitt 12 des Blechzuschnittes 10 zu einem Bodenblech 2 des Aufnahmetopfes 1, die Seitenabschnitte 13 bzw. 14 werden zur Seitenblechen 3 bzw. 4. Die Langlöcher 16 des Blechzuschnittes 10 bilden bei dem fertiggebildeten Aufnahmetopf 1 im Übergangsbereich zwischen dem Bodenblech 2 und den Seitenblechen 3 bzw. 4 angeordnete Durchtrittsöffnungen 6.

In Fig. 2 ist auch gut zu erkennen, dass die Seitenbleche 3 bzw. 4 nicht etwa lotrecht zu dem Bodenblech 2 gerichtet sind, sondern bei seitlich geradem und ebenem Verlauf aus der Lotrechten weiter in Richtung des jeweils gegenüberliegenden Seitenbleches gekippt sind, so dass der Aufnahmetopf 1 insgesamt pyramidenstumpfartig gebildet ist (wenngleich auch kein Pyramidenstumpf, da nicht gleichseitig). Ferner ist in Fig. 2 gut zu erkennen, dass die benachbarten Seitenbleche 3, 4 nicht über deren gesamte seitliche Kantenlänge aneinanderstoßen, sondern vielmehr nur in einem oberen Bereich aneinanderstoßen, wo sie miteinander verbunden sind, insbesondere verschweißt. In einem unteren Abschnitt ist jeweils eine weitere Durchtrittsöffnung 8 belassen, die ausgehend von dem Bodenblech 2 sich nach oben hin verjüngt. In der Fig. 2 nicht dargestellt, ist insbesondere auf die umlaufenden Oberkanten 9 der Seitenbleche 3, 4 noch ein Kantenschutz in Form einer aufgeschweißten Rundwulst, ebenfalls aus Edelstahl, aufgebracht. Dieser Kantenschutz dient dazu, dass mit ihren Köpfen bzw. Rüsseln in den Aufnahmetopf eintauchende Tiere, insbesondere Schweine, sich an einer ansonsten etwa scharfkantigen Oberkante 9 nicht verletzen.

Zu erkennen sind in der Fig. 2 auch die (dort nicht weiter mit Bezugszeichen bezeichneten) Langlöcher 17, die im Bodenblech 2 liegen und durch die hindurch Befestigungsmittel geführt werden können, mit denen der Aufnahmetopf 1 an einem Stallboden, insbesondere einem Spaltenboden, festgelegt werden kann, z.B. mittels herkömmlicher Spaltenanker als Befestigungsmittel. Dabei liegen diese Langlöcher 17 in einer Betrachtung von oben her derart nahe am Rand des Bodenbleches 2, dass sie in einer Aufsicht und Projektion der Oberkante 9 der Seitenbleche 3, 4 auf das Bodenblech 2 von dieser Projektion beschattet werden. Sie liegen insbesondere in einem Bereich, der für die Nutztiere, die den Aufnahmetopf verwenden sollen, insbesondere also von Schweinen, nicht erreicht werden können, so dass die dort vorstehenden Teile der Befestigungsmittel keine Verletzungsgefahr darstellen.

Bei dem dargestellten Ausführungsbeispiel erstrecken sich die Seitenabschnitte 13 bzw. 14 ausgehend von der jeweiligen Falzlinie 15 in einer Richtung senkrecht zu dieser über 160 mm. Die Abmessungen des mittleren Abschnittes 12 und somit später daraus gebildeten Bodenbleches 2 belaufen sich auf Kantenlängen von etwa 300 mm entlang der längeren Kante und etwa 200 mm entlang der kürzeren Kante. Dadurch, dass die Seitenabschnitte 13 und 14, wenn diese umgefalzt sind, als Seitenbleche 3, 4 nicht lotrecht, sondern schräg aufeinander zu gestellt sind, ist die lotrechte Höhe des Aufnahmetopfes 1 geringer als 160 mm, liegt zwischen 120 und 140 mm. Die im Übergangsbereich zwischen dem mittleren Abschnitt 12 und den Seitenabschnitten 13 angeordneten Langlöcher 16 haben einen mittleren Abstand von jeweils 65 mm, diejenigen Langlöcher 16 im Übergangsbereich zwischen dem mittleren Abschnitt 12 und den Seitenabschnitten 14 haben einen mittleren Abstand von 60 mm. Alle Langlöcher 16 haben ein Maß von jeweils 15 mm x 30 mm. Die für das Durchführen von Befestigungsmitteln dienenden Langlöcher 17 haben ein Maß von 9 mm x 30 mm.

In einem wie in Fig. 2 dargestellten Aufnahmetopf 1 kann nun ein Futtermittel oder ein Ergänzungsfuttermittel, insbesondere ein vorzugsweise pastöses, mineralhaltiges Ergänzungsfuttermittel auf Melassebasis, unmittelbar (d.h. ohne etwaige Umverpackungen) eingefüllt werden. Ein Nutztier, insbesondere ein Schwein, kann nun von der offenen Seite her in den Aufnahmetopf 1 mit seinem Maul bzw. seinem Rüssel hineinreichen und darin Wühlbewegungen ausführen, um das entsprechende Futtermittel bzw. Ergänzungsfuttermittel zu sich zu nehmen. Dabei wird solches Futtermittel bzw. Ergänzungsfuttermittel, insbesondere dann, wenn es pastös ist, durch die Durchtrittsöffnungen 6 bzw. 8 aus dem Aufnahmetopf 1 austreten, so dass das Schwein im Anschluss an seine Wühlbewegungen auch auf der Außenseite mit knabbernden Bewegungen und an Stellen mit einem Winkel entsprechend ausgetretenes Futtermittel bzw. Ergänzungsfuttermittel auf- und zu sich nehmen kann.

Dadurch, dass der Aufnahmetopf 1 aus Edelstahl gebildet ist, ist dieser nicht korrosiv und lässt sich bei einer Stallreinigung sehr leicht und einfach reinigen, z.B. mit einem Hochdruckwasserstrahl abspritzen.

Der erfindungsgemäße Aufnahmetopf 1 sollte in einem Stallbereich am Stallboden aufgestellt und dort fixiert werden, wobei ein Aufstellungsort außerhalb eines Kot- und Fäkalabschnittes gewählt werden sollte, um eine übermäßige Kontaminierung des Aufnahmetopfes 1 mit Urin oder Kot zu vermeiden.

### Bezugszeichenliste

- 1: Aufnahmetopf
- 2: Bodenblech
- 3: Seitenblech
- 4: Seitenblech
- 6: Durchtrittsöffnung
- 8: Durchtrittsöffnung
- 9: Oberkante
- 10: Blechzuschnitt
- 12: Abschnitt
- 13: Seitenabschnitt
- 14: Seitenabschnitt
- 15: Falzlinie
- 16: Langloch
- 17: Langloch

## Patentansprüche

1. Zu einer Oberseite hin mit einer Zugangsöffnung offener Aufnahmetopf für die Aufnahme und Darbietung von Futter- oder Ergänzungsfuttermitteln für Nutztiere, insbesondere für Schweine in der Stallhaltung, mit einem Bodenblech (2) sowie vier Seitenblechen (3, 4), die untereinander jeweils mit einem benachbarten Seitenblech (4, 3) und mit dem Bodenblech (2) verbunden sind, wobei jedes Seitenblech (3, 4) gegenüber einer zu dem Bodenblech (2) senkrecht verlaufenden Ebene mit einer die Zugangsöffnung begrenzenden Oberkante (9) in Richtung eines jeweils gegenüberliegenden Seitenblechs (3, 4) geneigt verläuft, wobei in Bereichen, in denen benachbarte Bleche (Seitenbleche und/oder Bodenblech) (2, 3, 4) aneinander angrenzen, Durchtrittsöffnungen (6, 8) vorgesehen sind.

2. Aufnahmetopf nach Anspruch 1, **dadurch gekennzeichnet, dass** entlang der Oberkanten (9) der Seitenbleche (3, 4) ein umlaufender Kantenschutz gebildet ist.

3. Aufnahmetopf nach Anspruch 2, **dadurch gekennzeichnet, dass** der Kantenschutz die Form einer Rundwulst aufweist.

4. Aufnahmetopf nach einem der vorhergehenden Ansprüche, **dadurch gekennzeichnet, dass** in dem Bodenblech (2) Befestigungsöffnungen (17) zum Durchführen von Befestigungsmitteln vorgesehen sind.

5. Aufnahmetopf nach Anspruch 4, **dadurch gekennzeichnet, dass** die Befestigungsöffnungen (17) in Bereichen des Bodenblechs (2) liegen, die von einer senkrechten Projektion eines Seitenblechs (3, 4) auf das Bodenblech (2) beschattet sind.

6. Aufnahmetopf nach einem der Ansprüche 4 oder 5, **dadurch gekennzeichnet, dass** die Befestigungsöffnungen (17) Langlöcher sind, die parallel zu einer angrenzenden Kantenlinie (15) des Bodenblechs (2) verlaufen.

7. Aufnahmetopf nach einem der vorhergehenden Ansprüche, **dadurch gekennzeichnet, dass** in den Bereichen, in denen das Bodenblech (2) mit den angrenzenden Seitenblechen (3, 4) zusammenstößt, mehrere von festen Materialverbindungsstegen unterbrochene Durchtrittsöffnungen (6) angeordnet sind.

8. Aufnahmetopf nach Anspruch 7, **dadurch gekennzeichnet, dass** die in den Bereichen, in denen das Bodenblech (2) mit den angrenzenden Seitenblechen (3, 4) zusammenstößt, angeordneten Durchtrittsöffnungen (6) sowohl in den Bereich des jeweiligen Seitenblechs (3, 4) als auch in den Bereich des Bodenblechs (2) hineinragen.

9. Aufnahmetopf nach einem der vorhergehenden Ansprüche, **dadurch gekennzeichnet, dass** in den Bereichen, in denen zwei benachbarte Seitenbleche (3, 4) aneinanderstoßen, von einem dem Bodenblech (2) nächstgelegenen Abschnitt ausgehende, sich keilförmig nach oben zur Zugangsöffnung hin verjüngende Durchtrittsöffnungen (8) vorgesehen sind.

10. Aufnahmetopf nach einem der vorhergehenden Ansprüche, **dadurch gekennzeichnet, dass** Bodenblech (2) und Seitenbleche (3, 4) aus einem einstückigen Zuschnitt (10) durch Umfalzen der Seitenbleche (3, 4) und Verbinden derselben an den Stoßlinien gebildet sind.

11. Aufnahmetopf nach einem der vorhergehenden Ansprüche, **dadurch gekennzeichnet, dass** das Bodenblech (2) und die Seitenbleche (3, 4) aus Metall, insbesondere aus Edelstahl gebildet sind.

12. Aufnahmetopf nach einem der vorhergehenden Ansprüche, **gekennzeichnet durch** ein rechteckiges Bodenblech (2).

13. Aufnahmetopf nach Anspruch 12, **gekennzeichnet durch** ein rechteckiges Bodenblech (2) mit einer Länge von 260 mm bis 340 mm, insbesondere 280 mm bis 320 mm, besonders bevorzugt 300 mm, und einer Breite von 160 mm bis 240 mm, insbesondere von 180 mm bis 220 mm, besonders bevorzugt von 200 mm.

14. Aufnahmetopf nach einem der vorhergehenden Ansprüche, **dadurch gekennzeichnet, dass** er eine Höhe, gemessen von dem Bodenblech (2) in lotrechter Richtung bis der Oberkante (9) eines Seitenbleches (3, 4) von 100 mm bis 150 mm, insbesondere von 120 mm bis 130 mm aufweist.
